# FASCICULE DE BREVET EUROPEEN

(11) **EP 0 421 880 B1**
(45) Date de publication et mention de la délivrance du brevet: **28.12.1994**
(21) Numéro de dépôt: 90402751.3
(22) Date de dépôt: 04.10.1990
(51) Int. Cl.: G02F 1/03, H04B 10/12

(54) **Composant polyvalent d'optique intégrée et réseau de distribution avec amplification optique**
Polyvalentes integriertes optisches Bauteil und Verteilungsnetz mit optischer Verstärkung
Multipurpose integrated optics component and distribution network with optical amplification

(30) Priorité: 06.10.1989 FR 8913105
(43) Date de publication de la demande: 10.04.1991
(73) Titulaire: FRANCE TELECOM, 75015 Paris (FR)
(72) Inventeur: Hamel, André, F-22300 Lannion (FR); Simon, Jean Claude, F-22700 Perros-Guirec (FR); Goedgebuer, Jean Pierre, F-25115 Pouilly les Vignes (FR); Porte, Henri, F-25770 Serre les Sapins (FR)
(74) Mandataire: Signore, Robert

(56) Documents cités:
- EP-A- 0 168 192
- GB-A- 2 165 115
- US-A- 3 923 374
- IEEE JOURNAL OF QUANTUM ELECTRONICS, vol. 25, no. 8, août 1989, pages 1760-1762; H. PORTE et al.: "Integrated TE-TM mode converter on Y-cut Z-propagatingLiNbO3 with an electrooptic phase matching for coherence multiplexing"
- JOURNAL OF LIGHTWAVE TECHNOLOGY, vol. 6, no. 6, juin 1988, pages 892-897; H.PORTE et al.: "Integrated waveguide modulator using a LiNbO3 TE TM convertorfor electrooptic coherence modulation of light"

## Description

L'invention a pour objet un composant polyvalent d'optique intégrée et un réseau de distribution avec amplification optique comportant application de ce composant. Elle trouve une application en télécommunications optiques et plus particulièrement pour le filtrage sélectif accordable en longueur d'onde ou pour la modulation de cohérence.

L'un des objectifs dans les liaisons par fibre optique est l'accroissement de la quantité d'information transmise sur un même support et en particulier l'accroissement du nombre de voies. Des méthodes de multiplexage essentiellement optiques sont actuellement développées en ce sens. Divers composants, réalisés en optique intégrée, sont nécessaires à ces techniques de multiplexage.

La présente invention porte sur un composant polyvalent d'optique intégrée qui s'adapte parfaitement à différents types de multiplexage.

Un premier objet de l'invention est de permettre la réalisation d'un modulateur de cohérence intégré, c'est-à-dire qu'il affecte au signal qui le traverse un retard modulable.

Un convertisseur de polarisation est décrit dans un article de H. Porte et al., intitulé "Integrated TE-TM Mode Converter on Y cut Z-Propagating LiNbO₃ with an electrooptic phase matching for coherence multiplexing" paru dans IEEE Journal of Quantum Electronics, vol. 25, n°8, pp. 1760-1762, August 1989. Ce convertisseur présente un retard optique quasi nul au repos. Il n'est donc pas utilisable pour transmettre en modulation de cohérence, car le retard introduit est inférieur à la longueur de cohérence de la source. Dans ce convertisseur, un guide est réalisé dans un substrat LiNbO₃ selon l'axe Z d'indice extraordinaire.

Un autre objet de l'invention est de permettre la réalisation, dans une version complètement intégrée, d'un système de multiplexage par modulation d'un retard optique tel que décrit dans la demande de brevet français déposée par l'Etat Français (représenté par le Ministre des PTT-CNET) le 23 décembre 1986 et publiée sous le numéro 2 608 869.

Un autre objet de l'invention est de permettre la réalisation d'un réseau de distribution intégré transmettant un signal modulé par retard optique et comportant différents étages d'amplification optique.

Un autre objet de l'invention est de permettre la réalisation d'un filtre sélectif intégré accordable en fréquence.

Le composant de l'invention ne transmet le signal que sur un guide unique. La propagation de l'onde lumineuse dans un matériau biréfringent introduit un retard entre les deux composantes se propageant suivant les axes neutres du matériau.

Ce retard peut être modulé en faisant varier électriquement la biréfringence du matériau.

Le choix d'un champ électrique continu appliqué permet aussi le filtrage sélectif, par interférence entre les composantes de l'onde lumineuse, du signal introduit dans le composant selon l'invention.

De façon plus précise, la présente invention concerne un composant polyvalent d'optique intégrée, comprenant :
- un substrat en matériau biréfringent ayant deux axes neutres perpendiculaires entre eux, l'un des axes neutres correspondant à l'indice ordinaire du substrat et l'autre axe neutre correspondant à l'indice extraordinaire du substrat,
- un guide de lumière formé dans une face du substrat,
- des moyens pour appliquer un champ électrique,
- un premier polariseur rectiligne disposé à une extrémité du guide de lumière,
- un second polariseur rectiligne disposé à l'autre extrémité du guide et présentant une direction de polarisation parallèle à celle du premier polariseur,
- des moyens de focalisation,

caractérisé en ce que :
- le guide de lumière est perpendiculaire à un plan contenant les deux axes neutres,
- et le champ électrique appliqué est perpendiculaire à la face du substrat dans laquelle le guide est formé, et est uniforme le long du guide de lumière.

La présente invention concerne aussi un réseau de distribution avec amplificateurs optiques comprenant un système de multiplexage faisant intervenir des retards optiques comportant plusieurs comoosants conformes au composant précédemment décrit pour créer ces retards ;
- une ligne de transmission principale reliée au système de multiplexage ;
- au moins un coupleur reliant la ligne de transmission principale à des lignes de transmission secondaires ;
- au moins un amplificateur optique sur une ligne de transmission secondaire ;
- des coupleurs reliant les lignes de transmission secondaires à des voies de distribution ; et
- chaque voie de distribution comportant un système de détection.

Les caractéristiques et avantages de l'invention apparaîtront mieux après la description qui suit, donnée à titre explicatif et nullement limitatif. Cette description se réfère à des dessins annexés, sur lesquels :
- la figure 1 représente schématiquement un composant selon l'invention ;
- la figure 2 représente schématiquement un système de transmission par modulation de cohérence comprenant un composant selon l'invention ;
- la figure 3 représente schématiquement un réseau de distribution conforme à l'invention ;
- la figure 4 représente schématiquement la courbe de transmission en fonction de la fréquence d'un composant conforme à l'invention ;
- la figure 5 représente schématiquement un système de multiplexage et de démultiplexage optique comprenant le composant conforme à l'invention.

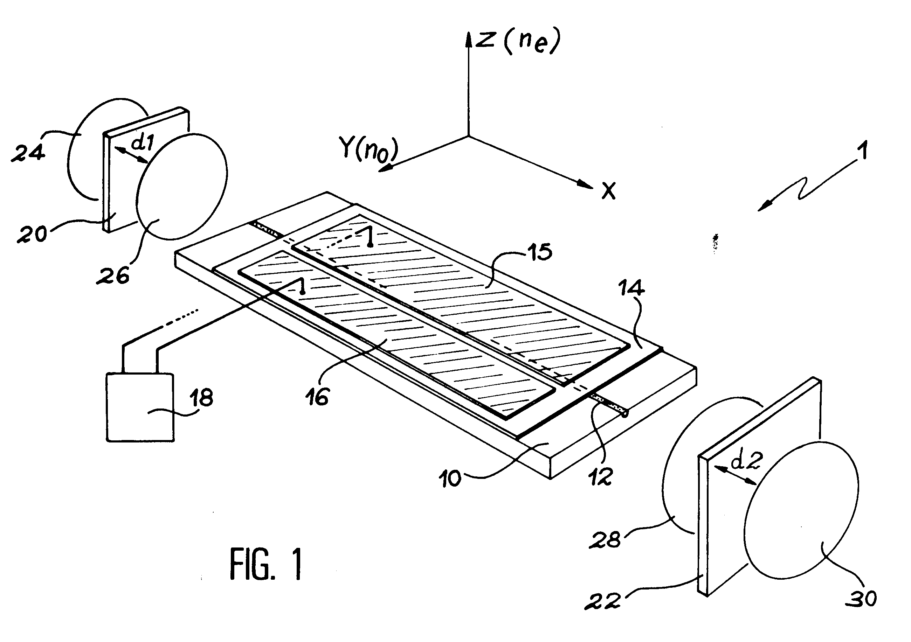

La figure 1 représente schématiquement un composant selon l'invention. Ce composant 1 comprend un substrat 10 parallélépipédique en matériau biréfringent, sur lequel est formé un guide de lumière 12. Le substrat 10 présente par exemple une épaisseur de 0,5 mm, une longueur de quelques dizaines de mm et une largeur de 8 mm.

Le guide est réalisé par diffusion d'un métal dans le matériau biréfringent. Ce métal est choisi avantageusement parmi le titane (Ti), le magnésium (Mg), le nickel (Ni), le vanadium (Vn) ou d'autres matériaux. Le guide 12 parcourt la longueur du substrat 10 et présente par exemple une largeur de 3 micromètres.

Le matériau biréfringent est choisi avantageusement parmi le niobate de lithium (LiNbO₃), le tantalate de lithium (LiTaO₃) ou d'autres matériaux. Ce matériau est taillé de manière à ce qu'une onde électromagnétique se propageant dans le guide se décompose en deux ondes ayant des polarisations perpendiculaires entre elles et suivant les axes neutres du matériau.

Sur l'exemple représenté, le matériau biréfringent étant du LiNbO₃, l'axe neutre correspondant à l'indice extraordinaire ne est orienté suivant un axe Z ; l'axe neutre correspondant à l'indice ordinaire no est orienté suivant un axe Y ; la propagation de la lumière dans le guide s'effectue suivant un axe X. Les axes X, Y, Z forment un repère de l'espace.

La face du substrat 10 sur laquelle est formé le guide 12 est recouverte d'une fine couche diélectrique 14, par exemple du SiO ayant une épaisseur d'environ 400 nm.

La couche diélectrique 14 est recouverte par deux électrodes 15, 16 par exemple en aluminium et ayant une épaisseur d'environ 500 nm. Ces électrodes sont avantageusement rectangulaires et présentent une longueur de 20 mm par exemple.

L'électrode 15 est disposée de manière à recouvrir le guide 12 sur sa longueur. Le guide 12 divisant la face du substrat 10 en deux parties, l'électrode 15 recouvre largement une des parties et déborde sur l'autre d'environ 6 micromètres.

L'autre électrode 16 recouvre une autre partie du substrat : l'écart entre les électrodes est par exemple de 7 micromètres.

Les électrodes 15, 16 sont connectées à une source d'alimentation électrique 18. L'ensemble formé par la couche diélectrique 14, les électrodes 15, 16 et la source d'alimentation 18, permet d'appliquer un champ électrique dans le substrat 10, perpendiculairement au guide 12 et uniformément le long du guide 12.

Les tensions délivrées par la source d'alimentation 18 sont de l'ordre de la dizaine de volts.

Le composant 1 comprend aussi un premier et un second polariseurs rectilignes 20, 22 disposés à chaque extrémité du guide de lumière 12. Ces polariseurs 20, 22 présentent des directions de polarisations d1 et d2 parallèles et disposées avantageusement à 45° des axes Y et Z, c'est-à-dire à 45° des axes neutres du matériau biréfringent, (d1 et d2 sont symbolisées par des flèches sur la figure 1).

Le composant 1 comporte en outre des moyens de focalisation 24, 26, 28, 30 qui permettent la traversée des polariseurs et une focalisation adaptée soit à l'introduction de la lumière dans le guide 12 soit à son introduction dans une fibre de sortie (non représentée).

Les polariseurs 20, 22 et l'ensemble de focalisation 24, 26, 28, 30 peuvent être également réalisés par des fibres optiques.

Un faisceau lumineux de polarisation quelconque pénétrant dans le composant 1 est tout d'abord polarisé rectilignement et focalisé dans le guide de lumière 12. Au cours de sa propagation dans le guide 12, en l'absence de tout champ électrique appliqué, l'onde électromagnétique se divise en deux ondes de polarisations dirigées suivant les axes neutres du matériau biréfringent et se propageant à des vitesses différentes.

L'application d'un champ électrique permet de faire varier la biréfringence du matériau et donc de modifier le retard entre les deux ondes. Le déphasage introduit par le champ électrique est proportionnel à son amplitude.

A la sortie du guide, les deux ondes sont à nouveau polarisées parallèlement.

Si la longueur de cohérence L du faisceau lumineux (L = λ²/ Δλ; = longueur d'onde du faisceau lumineux ; Δλ= largeur spectrale du faisceau) est inférieure au retard introduit (ou plutôt son équivalent en termes de longueur, c'est-à-dire ce retard multiplié par la vitesse de la lumière), les deux ondes ne vont pas interférer entre elles à la sortie du guide, et l'information constituée par la durée du retard est conservée.

Si la longueur de cohérence L du faisceau lumineux est supérieure au retard introduit, le composant 1 joue le rôle d'un interféromètre.

On va voir dans la suite comment ces deux situations peuvent être exploitées.

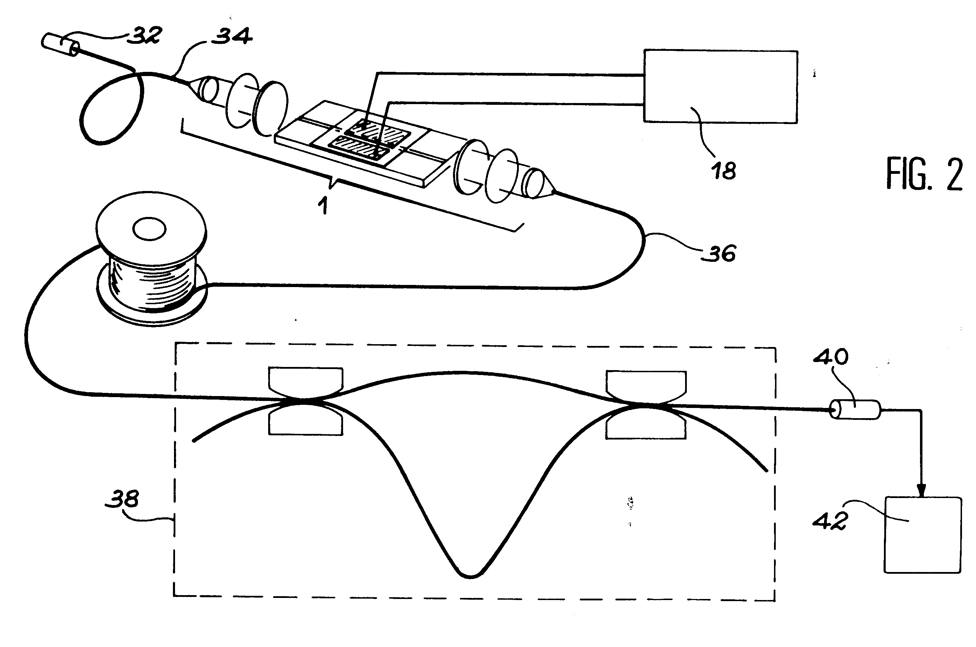

La figure 2 représente schématiquement un système de transmission par modulation de cohérence comprenant un composant selon l'invention. Une source lumineuse 32 délivre, par l'intermédiaire d'une fibre optique 34, un faisceau lumineux à l'entrée d'un composant 1 tel que décrit précédemment. Ce peut être, par exemple, une diode laser émettant un faisceau lumineux de longueur d'onde λ = 1 300 nm et de longueur de cohérence Lc = 200 µm ou une diode superluminescente de longueur de cohérence Lc = 40 µm.

Le composant 1 joue ici le rôle de modulateur de cohérence. En effet, la source d'alimentation 18 permet l'application d'un champ électrique variable introduisant des variations dans le retard entre les deux ondes se propageant dans le guide de lumière. La source d'alimentation 18 peut consister en un amplificateur vidéo relié à une caméra vidéo (non représentée) et dont la tension de sortie est proportionnelle au signal délivré par la caméra. L'information contenue dans ce signal est transportée sous forme de retard par le faisceau lumineux à l'intérieur d'une fibre optique monomode 36.

Pour qu'un tel dispositif fonctionne, le retard introduit dans le matériau biréfringent doit être supérieur à la longueur de cohérence L du faisceau lumineux. De cette manière, les ondes produites dans le modulateur à partir du faisceau lumineux n'interférent pas en sortie du modulateur.

La démodulation est assurée par un interféromètre intégré 38 de type Mach-Zehnder à fibres optiques accordé sur le retard introduit par le composant 1 en l'absence de champ appliqué.

Une photodiode 40, du type à détecteur en HgCdTe par exemple, permet la transformation du faisceau lumineux démodulé en signal électrique. Ce signal est amplifié par un amplificateur 42 et permet la visualisation des images enregistrées par la caméra vidéo.

Ce type de transport d'informations se prête particulièrement bien au multiplexage et l'on peut construire, grâce au composant de l'invention, un système de multiplexage du type de celui décrit dans le brevet français déjà mentionné, publié sous le numéro 2 608 869, dans une version totalement intégrée.

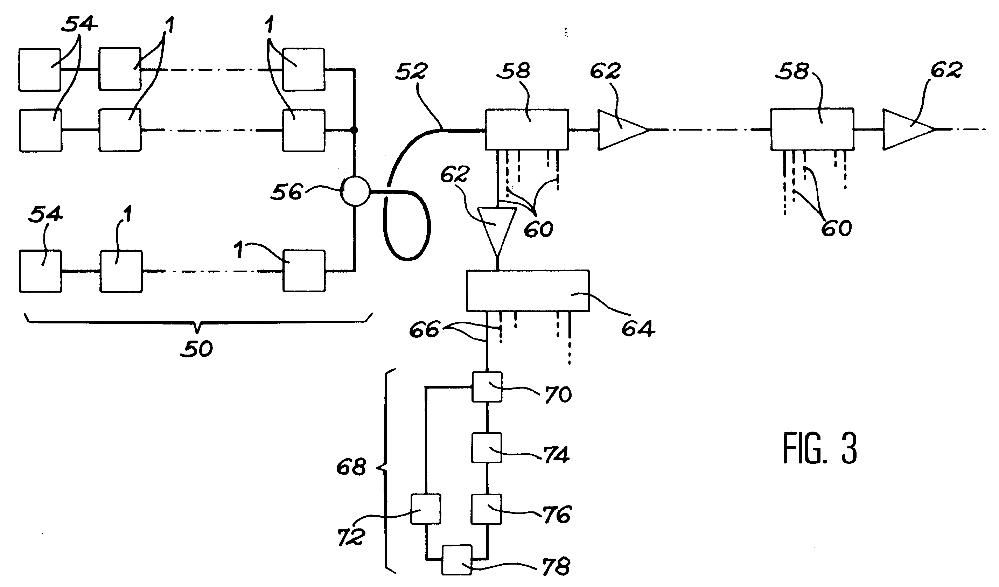

Ledit composant se prête particulièrement bien à la réalisation d'un réseau de distribution d'un signal. En référence à la figure 3, un système de multiplexage 50 délivre des signaux multiplexés sur une ligne de transmission principale 52.

Le système de multiplexage 50 combine une architecture série à une architecture parallèle. Le système 50 est constitué d'un ensemble de sources lumineuses 54 et de modulateurs réalisés par des composants 1 conformes à l'invention permettant une modulation par retards optiques des signaux lumineux délivrés par les sources 54.

Les sources lumineuses 54 peuvent être des diodes laser monomodes ou multimodes, des diodes électroluminescentes ou des diodes superluminescentes ou toute combinaison de ces différents types de sources. Les modulateurs 1 introduisent des retards optiques supérieurs aux longueurs de cohérence des sources ; plus généralement, ils sont tels qu'aucune modulation de l'intensité lumineuse de sortie n'apparaît quand le retard optique est modulé par le signal à transmettre.

Les différents étages du système 50 sont reliés aux entrées d'un coupleur 56 qui est connecté à la ligne de transmission principale 52.

Des coupleurs 58 connectés à la ligne de transmission, dérivent une partie des signaux multiplexés vers des lignes de transmission secondaires 60. La sortie de chaque coupleur 58 est connectée à l'entrée d'un amplificateur optique 62 dont la bande passante est adaptée aux signaux à transmettre.

On peut utiliser des amplificateurs à fibres, à effet Raman stimulé ou autre, des amplificateurs à semi-conducteurs ou tout autre amplificateur dont la bande passante est suffisante.

Des coupleurs 64 relient les lignes de transmissions secondaires à des voies de distribution 66. Dans un système de télédistribution, ces voies 66 desservent les usagers. Elles sont connectées à des systèmes de détection 68 pour démultiplexer et démoduler les signaux transmis dans les voies de distribution. Chaque coupleur 64 présente, en sortie, autant de voies de distribution 66 que d'usagers.

Les signaux arrivant à l'entrée du système de détection sont entachés d'un bruit d'intensité inhérent aux sources lumineuses utilisées. Etant donnée l'information transmise, codée sous forme de retard et extraite par interférences constructives, le bruit apporté par la source intervient comme un terme multiplicatif des signaux.

Le système de détection 68 présenté sur la figure 3 permet de s'affranchir du bruit d'intensité engendré par les sources lumineuses et l'amplificateur optique 62. Il comprend un séparateur 70 du signal transmis sur la voie de distribution 66 à laquelle il est connecté. Ce signal est donc divisé en un premier signal et un second signal. Un détecteur 72 du type photodiode délivre un signal électrique proportionnel au premier signal.

Le second signal est transmis à un moyen 74 de démodulation : par exemple, un interféromètre de type Mach Zehnder accordé sur le retard introduit par un des composants 1 du système de multiplexage 50. Ce moyen 74 est connecté à un second détecteur du type photodiode 76 délivrant un signal électrique proportionnel au second signal démodulé.

Un diviseur 78 effectue la division du signal délivré issu du second détecteur 76 par le signal délivré par le premier détecteur 72. On obtient en sortie du diviseur 78 un signal démodulé débarrassé du bruit du aux sources lumineuses 54 et à l'amplificateur optique 62.

Le composant selon l'invention assure aussi la fonction de filtre sélectif intégré accordable.

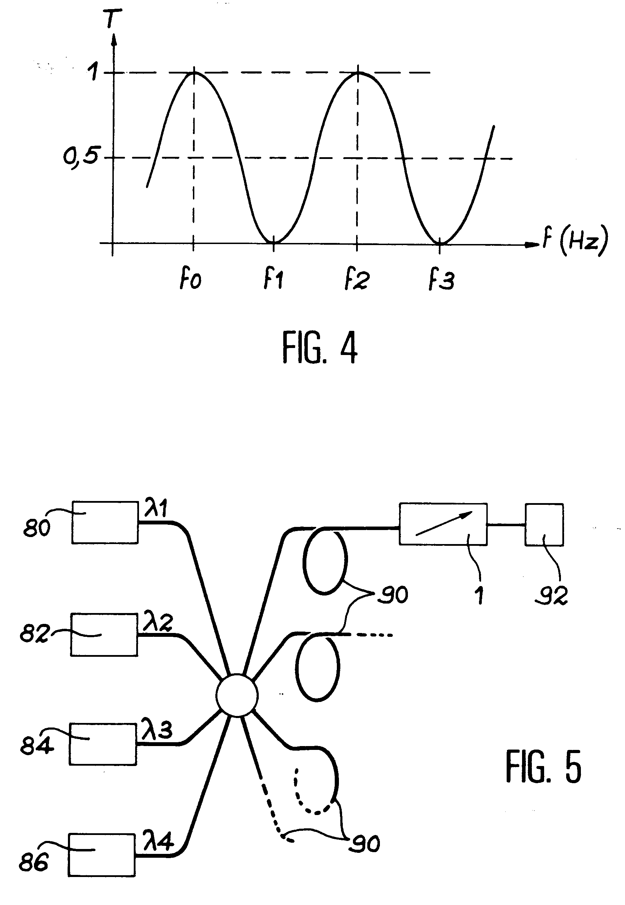

La figure 4 représente schématiquement la courbe de transmission d'un composant conforme à l'invention en fonction de la fréquence de l'onde lumineuse guidée à l'intérieur du composant. Lorsque la source lumineuse associée au composant délivre un faisceau lumineux dont la longueur de cohérence est supérieure au retard introduit lors de la propagation du faisceau lumineux à l'intérieur du guide de lumière, les composantes du faisceau polarisées selon les deux axes neutres du matériau biréfringent interfèrent en sortie du composant : ce dernier constitue un interféromètre.

La transmission T du composant a alors l'allure d'une sinusoïde en fonction de la fréquence du faisceau lumineux. Les interférences sont constructives pour les fréquences fₒ, f₂, ... et T vaut 1, alors qu'elles sont destructrives pour les fréquences f₁, f₃, ... et T vaut 0. Les valeurs de fₒ, f₁, ... dépendent des caractéristiques du composant (matériau biréfringent utilisé, longueur du guide, valeur de la tension appliquée ... ).

Seules certaines fréquences peuvent se propager dans le guide : le composant est donc dans ce cas un filtre sélectif. La valeur de ces fréquences dépend du champ électrique appliqué : le filtre est accordable.

La figure 5 représente schématiquement un système de multiplexage en longueur d'onde et de démultiplexage comprenant le composant conforme à l'invention. Dans cet exemple, seules quatre sources lumineuses 80, 82, 84, 86 sont représentées, mais un tel dispositif peut en comporter bien d'autres. Les sources lumineuses 80, 82, 84, 86 émettent des faisceaux lumineux à des longueurs d'onde différentes, respectivement λ1, λ2, λ3, λ4. Ces faisceaux lumineux sont délivrés sur les entrées d'un coupleur 88 qui réalise leur multiplexage et qui délivre les faisceaux multiplexés sur des fibres optiques de transmission 90.

Ces dernières sont connectées à des systèmes de démultiplexage comprenant un composant 1 conforme à l'invention et un photodétecteur 92.

Les faisceaux lumineux aux longueurs d'onde λ1, λ2, λ3, λ4 présentent des longueurs de cohérence supérieures au retard introduit par le composant 1 qui joue ici le rôle de filtre sélectif accordable. En effet, selon le champ électrique appliqué, on peut choisir la longueur d'onde qui est transmise par le composant et, filtrer les autres. Afin d'améliorer la sélectivité d'un tel dispositif, on peut connecter en série plusieurs composants dont les transmissions T sont toutes centrées sur la même longueur d'onde, mais dont la périodicité de la courbe de transmission est double, triple, ... de celle du premier composant.

Dans l'état actuel de la technique, à l'aide d'un composant unique, on peut séparer des longueurs d'onde distantes d'environ 0,3 nm.

Les descriptions qui précèdent ne sont données qu'à titre d'exemples non limitatifs ; de nombreuses variantes peuvent être envisagées, sans sortir pour autant du cadre de l'invention.

## Revendications

1. Composant polyvalent d'optique intégrée comprenant :
- un substrat (10) en matériau biréfringent ayant deux axes neutres perpendiculaires entre eux, l'un des axes neutres correspondant à l'indice ordinaire du substrat et l'autre axe neutre à l'indice extraordinaire du substrat,
- un guide de lumière (12) formé dans une face du substrat (10),
- des moyens (14, 15, 16, 18) pour appliquer un champ électrique,
- un premier polariseur rectiligne (20) disposé à une extrémité du guide (12) de lumière,
- un second polariseur rectiligne (22) disposé à l'autre extrémité du guide (12) et présentant une direction de polarisation (d₂) parallèle à celle (d₁) du premier polariseur,
- des moyens de focalisation (24, 26, 28, 30),
caractérisé en ce que :
- le guide de lumière (12) est perpendiculaire à un plan contenant les deux axes neutres,
- et le champ électrique appliqué est perpendiculaire à la face du substrat (10) dans laquelle le guide (12) est formé, et est uniforme le long du guide (12) de lumière.

2. Composant selon la revendication 1, caractérisé en ce que le champ électrique comporte au moins une composante variable.

3. Composant selon la revendication 1, caractérisé en ce que le champ électrique comporte au moins une composante continue.

4. Composant selon la revendication 1, caractérisé en ce que les moyens (14, 15, 16, 18) pour appliquer un champ électrique comprennent :
- une couche diélectrique (14) recouvrant la face du matériau biréfringent dans laquelle est formé le guide (12) ;
- une première électrode (15) recouvrant partiellement la couche diélectrique (14) au moins au-dessus du guide de lumière (12) ;
- une seconde électrode (16) recouvrant une autre partie de la couche diélectrique (14) ;
- une source d'alimentation électrique (18) connectée aux électrodes (15, 16).

5. Composant selon la revendication 1, caractérisé en ce que la direction de polarisation (d1, d2) des polariseurs rectilignes (20, 22) est à 45° des axes neutres du matériau biréfringent (10).

6. Composant selon la revendication 1, caractérisé en ce qu'il constitue un filtre optique accordable permettant de réaliser des fonctions de démultiplexage optique par séparation des fréquences optiques.

7. Réseau de distribution, caractérisé en ce qu'il comprend :
- un système de multiplexage (50) faisant intervenir des retards optiques comportant plusieurs composants (1) selon la revendication 1 pour créer ces retards ;
- une ligne de transmission principale (52) reliée au système de multiplexage (50) ;
- au moins un coupleur (58) reliant la ligne de transmission principale (52) à des lignes de transmission secondaires (60) ;
- au moins un amplificateur optique (62) permettant de remonter le niveau de puissance optique sur une ligne de transmission secondaire (60).

8. Réseau de distribution selon la revendication 7, caractérisé en ce qu'il comprend en outre
- des coupleurs (64) reliant les lignes de transmission secondaires (60) à des voies de distribution (66), chaque voie de distribution (66) comportant un système de détection (68) qui introduit des retards appropriés.

9. Réseau de distribution selon la revendication 8, caractérisé en ce que les systèmes de détection (68) comportent chacun :
- un séparateur (70) du signal transmis sur la voie de distribution (66) en un premier signal et un second signal ; et
- un moyen pour réduire le niveau de bruit.

10. Réseau de distribution selon la revendication 9, caractérisé en ce que le moyen pour réduire le niveau de bruit comporte :
- un premier détecteur (72) délivrant un signal électrique proportionnel au premier signal ;
- un moyen (74) pour démoduler le second signal ;
- un second détecteur (76) délivrant un signal proportionnel au second signal démodulé ;
- un diviseur (78) effectuant la division du signal délivré par le second détecteur (72) par le signal délivré par le premier détecteur (76).

## Patentansprüche

1. Mehrzweckbauteil mit integrierter Optik umfassend :
- ein Substrat (10) aus doppelbrechendem Material mit zwei neutralen, zueinander senkrecht liegenden Achsen, wobei eine der neutralen Achsen der normalen Indexziffer des Substrats und die andere neutrale Achse der extraordinären Indexziffer des Substrats entspricht,
- eine Lichtführung (12), die in einer Seite des Substrats (10) ausgebildet ist,
- Einrichtungen (14, 15, 16, 18) zum Anlegen eines elektrischen Feldes,
- einen ersten geradlinigen Polarisator (20) der an einem Ende der Lichtführung (12) angeordnet ist,
- einen zweiten geradlinigen Polarisator (22), der an dem anderen Ende der Führung (12) angeordnet ist und eine Polarisationsrichtung (d2) aufweist, die zu der (d1) des ersten Polarisators parallel verläuft,
- Fokussiermittel (24, 26, 28, 30),
dadurch gekennzeichnet, daß :
- die Lichtführung (12) zu einer Ebene, die die beiden neutralen Achsen enthält senkrecht steht,
- und das angelegte elektrische Feld ist zu der Substratseite (10), in der die Führung (12) ausgebildet ist, senkrecht und entlang der Lichtführung (12) einheitlich.

2. Bauteil nach Anspruch 1, dadurch gekennzeichnet, daß das elektrische Feld zumindest eine variable Komponente umfaßt.

3. Bauteil nach Anspruch 1, dadurch gekennzeichnet, daß das elektrische Feld zumindest eine kontinuierliche Komponente umfaßt.

4. Bauteil nach Anspruch 1, dadurch gekennzeichnet, daß die Mittel (14, 15, 16, 18) zum Anlegen eines elektrischen Feldes umfassen :
- eine dielektrische Schicht (14), die die Seite des doppelbrechenden Materials überdeckt, in der die Führung (12) ausgebildet ist ;
- eine erste Elektrode (15), die die dielektrische Schicht (14) partiell zumindest über der Lichtführung (12) abdeckt ;
- eine zweite Elektrode (16), die einen anderen Teil der dielektrischen Schicht (14) abdeckt ;
- eine elektrische Versorgungsquelle (18), die an die Elektroden (15, 16) angeschlossen ist.

5. Bauteil nach Anspruch 1, dadurch gekennzeichnet, daß die Polarisationsrichtung (d1, d2) der geradlinigen Polarisatoren (20, 22) in 45 zu neutralen Achsen des doppelbrechenden Materials (10) stehen.

6. Bauteil nach Anspruch 1, dadurch gekennzeichnet, daß es einen abstimmbaren optischen Filter darstellt, der eine Ausführung von optischen Demultiplexierfunktionen per Trennung der optischen Frequenzen ermöglicht.

7. Verteilungsnetz, dadurch gekennzeichnet, daß es umfaßt :
- ein Multiplexiersystem (50), das optische Retardationen auslöst und mehrere Bauteile (1) nach Anspruch 1 umfaßt, um diese Retardationen zu erzeugen ;
- eine Hauptübertragungsleitung (52), die mit dem Multiplexiersystem (50) verbunden ist ;
- zumindest einen Koppler (58), der die Hauptübertragungsleitung (52) mit sekundären Übertragunsleitungen (60) verbindet ;
- zumindest einen optischen Verstärker (62), der es ermöglicht, das optische Leistungsniveau auf eine sekundäre Übertragungsleitung (60) anzuheben.

8. Verteilungsnetz nach Anspruch 7, dadurch gekennzeichnet, daß es ferner umfaßt :
- Koppler (64), die die sekundären Übertragungleitungen (60) mit Verteilungswegen (66) verbinden, wobei jeder Verteilungsweg (66) ein Erfassungssystem (68) aufweist, das geeignete Retardationen einführt.

9. Verteilungsnetz nach Anspruch 8, dadurch gekennzeichnet, daß die Erfassungssysteme (68) jeweils umfassen :
- einen Trenner (70) des auf dem Verteilungsweg (66) übermittelten Signals in ein erstes Signal und ein zweites Signal ; und
- eine Einrichtung zur Reduktion des Geräuschpegels.

10. Verteilungsnetz nach Anspruch 9, dadurch gekennzeichnet, daß die Einrichtung zur Reduktion des Geräuschpegels umfaßt :
- eine erste Erfassungseinrichtung (72), die dem ersten Signal ein proportionelles elektrisches Signal übermittelt ;
- eine Einrichtung (74) zur Demodulation des zweiten Signals ;
- eine zweite Erfassungseinrichtung (76), die dem zweiten demodulierten Signal ein proportionelles Signal übermittelt ;
- eine Teilvorrichtung (78), die die Teilung des von der zweiten Erfassungsvorrichtung (72) übermittelten Signals durch das von der ersten Erfassungsvorrichtung (76) übermittelte Signal ausführt.

## Claims

1. Multipurpose integrated optics component comprising:
- a birefringent material substrate (10) having two neutral axes perpendicular to one another, one of the neutral axes corresponding to the ordinary index of the substrate and the other neutral axis corresponding to the extraordinary index of the substrate,
- a light guide (12) formed in one face of the substrate (10),
- means (14, 15, 16, 18) for applying an electric field,
- a first linear polarizer (20) located at one end of the light guide (12),
- a second linear polarizer (22) located at the other end of the guide (12) and having a polarization direction (d₂) parallel to that (d₁) of the first polarizer,
- focussing means (24, 26, 28, 30),
characterized in that:
- the light guide (12) is perpendicular to a plane containing the two neutral axes,
- and the electric field applied is perpendicular to the face of the substrate (10) in which the guide (12) is formed and is uniform along the light guide (12).

2. Component according to claim 1, characterized in that the electric field has at least one variable component.

3. Component according to claim 1, characterized in that the electric field has at least one continuous component.

4. Component according to claim 1, characterized in that the means (14, 15, 16, 18) for applying an electric field comprise:
- a dielectric layer (14) covering the face of the birefringent material in which the guide (12) is formed,
- a first electrode (15) partly covering the dielectric layer (14) at least above the light guide (12),
- a second electrode (16) covering another part of the dielectric layer (14),
- an electric power supply (18) connected to the electrodes (15, 16).

5. Component according to claim 1, characterized in that the polarization direction (d1, d2) of the linear polarizers (20, 22) is 45° with respect to the neutral axes of the birefringent material (10).

6. Component according to claim 1, characterized in that it constitutes a tunable optical filter making it possible to perform optical demultiplexing functions by separation of the optical frequencies.

7. Distribution network, characterized in that it comprises:
- a multiplexing system (50) introducing optical delays having several components (1) according to claim 1 in order to produce said delays,
- a main transmission line (52) connected to the multiplexing system (50),
- at least one coupler (58) connecting the main transmission line (52) to secondary transmission lines (60),
- at least one optical amplifier (62) making it possible to raise the optical power level on a secondary transmission line (60).

8. Distribution network according to claim 7, characterized in that it also comprises couplers (64) linking the secondary transmission line (60) to distribution channels (66), each distribution channel (66) having a detection system (68), which introduces appropriate delays.

9. Distribution network according to claim 8, characterized in that each of the detection systems (68) incorporates a separator (70) of the signal transmitted on the distribution channel (66) so as to give a first signal and a second signal and a means for reducing the noise level.

10. Distribution network according to claim 9, characterized in that the means for reducing the noise level comprises:
- a first detector (72) supplying an electric signal proportional to the first signal,
- a means (74) for demodulating the second signal,
- a second detector (76) supplying a signal proportional to the second demodulated signal,
- a divider (78) performing the division of the signal supplied by the second detector (72) by the signal supplied by the first detector (76).
